# EUROPEAN PATENT APPLICATION

(11) **EP 2 066 074 A1**
(43) Date of publication of application: **03.06.2009**
(21) Application number: 07301603.2
(22) Date of filing: 30.11.2007
(51) Int. Cl.: H04L 12/18, H04L 12/56

(54) **Method to avoid unsolicited traffic transmission to non-receiver nodes, in an MPLS communication network**

(71) Applicant: Alcatel Lucent, 75008 Paris (FR)
(72) Inventor: Ciavaglia, Laurent, 92120, Montrouge (FR); Brehon, Yannick, 75014, Paris (FR)
(74) Representative: Hervouet, Sylvie

(57) **Abstract**

A method to avoid unsolicited traffic transmission to non-receiver nodes, in an Multi Protocol Label Switching, MPLS, communication network (1) composed of switching nodes (A-K) and using at least one Point-to-Multipoint, P2MP, tunnel (2) to transport P2MP Label Switch Paths, LSPs, (5, 6) comprising the steps of:
- transporting P2MP LSPs (5, 6) over said P2MP tunnel (2) in such a way that all downstream nodes of said tunnel (2) receive every labelled packet (7, 8) which is injected into said tunnel (2),
- sending a traffic filtering request (11) from a termination node (3) towards its closest upstream branch node (4) in the P2MP tunnel, upon reception of a labelled packet (8) pertaining to an unsolicited LSP (6), to stop the emission of said unsolicited LSP (6),
- filtering labelled packets (7, 8) at said upstream branch node (4) upon reception of said traffic filtering request (11), to stop the emission of unsolicited traffic for said unsolicited LSP (6).

## Description

The technical domain of the invention is the domain of communication networks, and particularly Multi Protocol Label Switching (MPLS) communication networks that use Point-to-Multipoint (P2MP) connections.

More particularly, the invention concerns a method to avoid transport of unsolicited traffic that may occur when transporting P2MP Label Switch Paths (LSPs) over a P2MP tunnel.

In an MPLS framework, the introduction of point-to-multipoint structures raises an important issue: that of transporting P2MP LSPs over P2MP tunnels. When addressing that specific problem, it may occur that a P2MP LSP is transported, which only needs to reach a subset of the leaves of the transporting tunnel. Today, the LSP is transported in the tunnel in such a way that all downstream nodes receive every packet which is injected in the tunnel. This results in consuming network resources uselessly when transporting packets over branches to nodes which do not expect them and which will eventually filter (i.e. drop/discard) them.

Two approaches are known to solve that problem.

One possible solution to avoid the transport of unsolicited traffic on/to non-receiver branches/nodes is to insure a strict one-to-one mapping between the leaves of the transported P2MP LSP and those of the transporting P2MP structures, i.e., to insure an exact match between the two trees. Using this approach, all leaves (i.e., nodes) are true receivers and the problem of non-receivers does not occur. The major drawback of this solution is to find an exact-matching transporting tree (tunnel) for any of the transported P2MP LSPs. This requirement may lead to a limited efficiency, resulting from a high number of P2MP tunnels and a low degree of nesting/multiplexing, thus lessening the interest of tunnels.

Another possible solution is to let all the traffic flows reach the destination (leaf) nodes and let these nodes drop/discard the unsolicited traffic based on the information contained in the destination field of the packet header. The major drawback of this solution is the unnecessary resource consumption in some branches of the P2MP transporting tree.

The present invention addresses and solves this problem without presenting the aforementioned drawbacks.

The object of the invention is a method for pruning/grafting a P2MP tree structure based on traffic filter/resume requests for a LSP, said traffic requests being originated from the terminating node (or leaf-initiated). The traffic requests can be recursively forwarded upwards in order to reach the appropriate branch node(s) closest to the source of the traffic.

The invention concerns a method to avoid unsolicited traffic transmission to non receiver nodes, in an Multi Protocol Label Switching, MPLS, communication network composed of switching nodes and using at least one Point-to-Multipoint, P2MP, tunnel to transport P2MP Label Switch Paths, LSPs, comprising the steps of:
- transporting P2MP LSPs over said P2MP tunnel in such a way that all downstream nodes of said tunnel receive every labelled packet which is injected into said tunnel,
- sending a traffic filtering request from a termination node towards its closest upstream branch node in theP2MP tunnel, upon reception of a labelled packet pertaining to an unsolicited LSP, to stop the emission of said unsolicited LSP,
- filtering labelled packets at said upstream branch node upon reception of said traffic filtering request, to stop the emission of unsolicited traffic for said unsolicited LSP.

According to another feature of the invention, a traffic filtering request comprises an identifier of said unsolicited LSP to filter.

According to another feature of the invention, a termination node detects the reception of an unsolicited traffic when a label of an incoming labelled packet is not present in the Incoming Label Map table, ILM, of the node.

According to another feature of the invention, the filtering is realised in the branch nodes by segregating the labels of incoming packet to select the downstream nodes to which packets must be forwarded or not.

According to another feature of the invention, the upstream branch node creates a new entry in its Incoming Label Map table, ILM, to isolate said unsolicited LSP from others LSPs.

According to another feature of the invention, when a branch node is requested to filter on all of its downstream nodes in the P2MP tunnel for a given LSP, the method further comprises the steps of:
- sending a traffic filtering request from said branch node towards its closest upstream branch node in the P2MP tunnel, to stop the emission of said LSP,
- filtering labelled packets at said upstream branch node upon reception of said traffic filtering request, to stop the emission of traffic for said LSP.

According to another feature of the invention, the method further comprises the steps of:
- sending a traffic resume request from a node towards its closest upstream branch node in the P2MP tunnel, to resume the emission of a LSP,
- stop filtering labelled packets at said upstream branch node upon reception of said traffic resume request, to resume the emission of traffic for said LSP,
- forward a traffic resume request from said branch node to its upstream branch node if traffic had been previously filtered upstream.

According to another feature of the invention, a traffic resume request comprises an identifier of said LSP to resume.

According to another feature of the invention, when a branch node detects that all of its downstream nodes are receivers for a given LSP, the method further comprises the steps of:
- removing ILM entries previously created to isolate LSPs with unsolicited traffic,
- resume previous behaviour without filtering.

According to another feature of the invention, when a branch node is informed that one of its downstream nodes has restarted, the method further comprises the steps of:
- stop filtering at said branch node toward said downstream node,
- waiting for the reception of traffic filtering requests from said downstream node,
- forward a traffic resume request from said branch node to its upstream branch node if traffic had been previously filtered upstream.

According to another feature of the invention, traffic filtering request and traffic resume request use an extended Notify message.

According to another feature of the invention, the Notify message is extended with a "P" or "Pruning" bit for traffic filtering request and a "G" or "Grafting" bit for traffic resume request.

According to another feature of the invention, the Notify message is extended with a label set containing an ordered lists of labels that should respectively be pruned of grafted, depending of the setting of "P" or "G" bits.

Others features, details and advantages of the invention will become more apparent from the detailed illustrating description given hereafter with respect to the drawings on which:

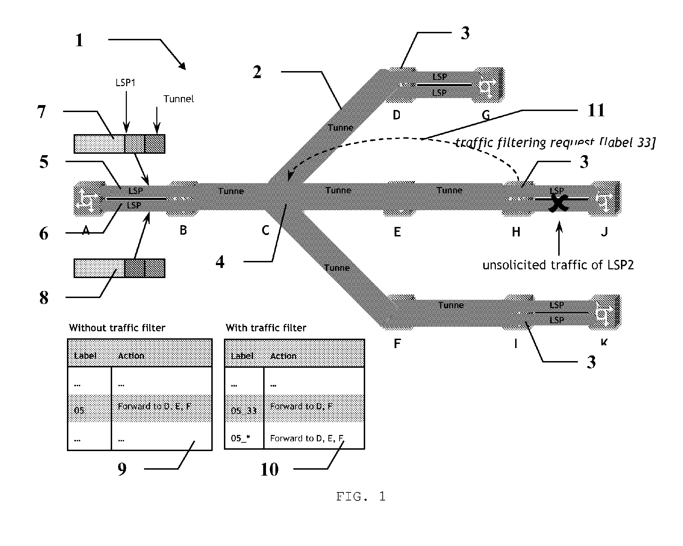

- figure 1 is an illustrative MPLS network according to the invention.

Figure 1 shows an illustrative MPLS communication network
1. Said network is here composed of switching nodes A-K. A P2MP tunnel 2, comprising nodes B-F, H, I, is implemented with a source node B, a branching node 4, C, and three termination or leaf nodes 3, D, H, I. Said tunnel 2 may transport several LSP traffics. Here for illustration purposes, two such LSPs are figured: LSP1 5 and LSP2 6. The label associated to LSP1 is 17, and the label associated to LSP2 is 33. The label associated to the tunnel 2 is 05. A packet 7 pertaining to LSP1 then comprises a first or inner label 17. A packet 8 pertaining to LSP2 comprises a first or inner label 33. Both packets 7, 8, when entering tunnel 2 receive a second or tunnel label 05, used to route/switch them along said tunnel 2.

While a P2MP tunnel 2 is advantageous to globally transport LSPs, it may raise problems of unsolicited packets being transmitted over some nodes due to said globalisation.

With reference to figure 1, for example, the distribution tree of LSP2 does not exactly correspond to the tunnel tree, and LSP2 must not be transported to node J. Due to the tunnel transport, node J would receive LSP2 traffic despite unsolicited.

The main idea of the invention is to prune or adapt the distribution tree of each LSP whose distribution tree differs from the tunnel tree. Said adaptation is initiated by requests sent by termination nodes 3.

The method according to the invention aims to avoid unsolicited traffic transmission to non-receiver nodes and comprises the following steps. First the P2MP LSPs 5, 6 are transported over said P2MP tunnel 2. For that transport the tunnel label is used. Such way of globally transporting the LSP packets results in that all downstream nodes of said tunnel 2 receive every labelled packet 7, 8, which is injected into said tunnel 2. In the example of figure 1, packets pertaining to both LSP1 and LSP2 are globally transmitted to all nodes of the tunnel 2, until all termination nodes 3, G, H, I.

As a second step, each termination node 3 upon reception of a labelled packet pertaining to an unsolicited LSP 6, sends a traffic filtering request 11 to ask for stopping the emission of said unsolicited LSP 6. Said request 11 is sent upstream in the tunnel 2 towards the upstream branch node 4 closest to the termination node 3 in the P2MP tunnel. A branching node 4 is a node of the tunnel 2, which forwards traffic to more than one downstream node 3. In the example of figure 1, termination node 3, H, upon receiving a packet pertaining to unsolicited LSP2 6 will send a corresponding traffic filtering request 11 to its upstream branching node 4, C, asking to stop the transmission of LSP2 to the sub-tree downstream of node C, comprising the request emitting node H.

As a third step, said upstream branch node 4, C, when receiving said traffic filtering request 11, will start filtering labelled packets 7, 8, accordingly, stopping the emission of traffic for said unsolicited LSP 6 toward the termination node 3 that emitted the traffic filtering request 11. In the example of figure 1, branching node 4, C, will stop the emission of LSP2 packets to nodes E and H, while carrying on sending said LSP2 packets to others branches D, F, I and sending LSP1 packets to all tunnel downstream nodes 3, including the branch containing termination node H, that initiated the traffic filtering request only for LSP2.

Advantageously, the traffic filtering request 11 identifies the unsolicited LSP 6 to filter. This can be done by including in the request 11 an identifier, e.g. the LSP's label.

The traffic filtering request 11 is initiated by a termination node 3 that is a leaf node of the tunnel 2, upon detection of an unsolicited traffic 6. Said detection may be done, by scanning the Incoming Label Map table, ILM, 9, 10, of the termination node 3. Each node comprises such an ILM table 9, 10. Said ILM table 9, 10, is used by the node to route incoming LSPs 5, 6, based on their label. If an incoming packet 7, 8, comprises a label not present in said ILM 9, 10, of the termination node 3, then the packet 8 pertains to an LSP 6 that is unsolicited.

At the branch node level, the filtering is done by segregating the labels of incoming packet 7, 8. Such segregation is done both on the tunnel label and on inner LSP's labels, in order to select the downstream nodes 3 over which packet must be forwarded or not. Referring to the example of figure 1, the filtering of LSP1/LSP2 packets 7, 8, is done by inspecting the tunnel label 05 and also the LSP's labels 17 and 33.

To filter the traffic, the upstream branch node 4 creates a new entry in its Incoming Label Map table, ILM, 9, 10, to isolate said unsolicited LSP 6 from others LSPs 5. Referring to the example of figure 1, ILM table is represented before filtering 9 and after filtering 10. Before filtering there is only a tunnel label 05 and all packets (LSP1 and LSP2) are forwarded indifferently to all downstream nodes D, E, F. After filtering, a new entry in form of a label 05_33 is added in the ILM with forwarding destination nodes associated restricted to only D and F nodes, so as to manage the case of LSP2 6. The case of LSP1 5, which continues to be managed with the same previous behaviour, is managed by the same initial tunnel label 05, which is mentionned 05_* in the new ILM table 10.

It is important to notice that the method is advantageously recursive. When a branch node 4 is requested to filter on all of its downstream nodes 3 in the P2MP tunnel for a given LSP 5, 6, namely when it has received a traffic filtering request 11 from all of its downstream nodes 11 for a given LSP 5, 6, said branch node 4 no longer needs to receive said LSP traffic. The branch node 4 then behaves as if it had become a termination node receiving unsolicited traffic. The method can then be applied again, and the branch node 4 may send a traffic filtering request 11 towards its closest upstream branch node in the P2MP tunnel, to stop the emission of said unsolicited LSP. At reception of said request, the upstream branch node can apply filtering in the same way as described before.

Alternately, when a node 3 changes its status to become a receiver and wants to receive a given LSP traffic, it may send a traffic resume request towards its closest upstream branch node 4 in the P2MP tunnel. Such a request asks the branch node 4 to resume the emission of said LSP 6. Upon reception of said resume request, the upstream branch node 4 stops filtering said LSP traffic and resume the emission of traffic for said LSP toward the requesting node 3.

In case traffic had been previously filtered upstream, another step is necessary. It comprises the forwarding of a traffic resume request from said branch node to its upstream branch.

Advantageously, the traffic resume request identifies the LSP to resume. This can be done by including in the request an identifier, e.g. the LSP's label.

After resume operation, it may arise that a branch node 4 has all of its downstream nodes 4 that are receivers for a given LSP. Then filtering is no longer needed and the method may advantageously comprise the following steps in order to return back to the previous behaviour that is to the global tunnel routing. This is done by following the following steps:
- removing ILM entries previously created to isolate LSPs with unsolicited traffic, since LSPs no longer need to be isolated,
- resuming previous behaviour without filtering.

The branch node 4 may be informed of such a situation for example by analysing its ILM, FIB or upon reception of P2MP LSP signalling messages establishing the P2MP LSP branch from the branch node 4 to the destination node.

As an optional feature, the method may comprise the following steps in order to securely deal with a downstream node 3 restart. When a branch node 4 is informed that one of its downstream nodes 3 has restarted (due to a failure for example), the method comprises the steps of:
- stopping filtering at said branch node 4 toward said downstream node 3,
- waiting for the reception of traffic filtering requests 11 from said downstream node 3
- forward a traffic resume request from said branch node to its upstream branch node if traffic had been previously filtered upstream.

It should be noted that the stop of filtering concerns here all filtered LSPS 5, 6, towards the restarting node 3. So doing, by stopping selective filtering for that node 3, and waiting for a new request 11 for selective filtering to be initiated, precludes a node 3 from restarting and "forgetting" it had asked for the filtering.

The branch node 4 may be informed or may detect such "restarting" situation by any means, for example through signalling.

A Notify message is a known type of message used in MPLS protocol. It is proposed to extend the Notify message in support of the filtering/pruning and resume/grafting mechanisms. The Notify message is a generalized notification message. It is proposed to use such Notify messages as traffic filtering 11 or resume request for pruning and grafting purposes, amending said Notify messages by adding two specific new bits in the ADMIN STATUS object. [RFC3471] and [RFC3473] indicates the format and contents of the ADMIN_STATUS object. A new "P" bit is added for Pruning control as shown below. A new "G" bit is added for Grafting control as shown below.

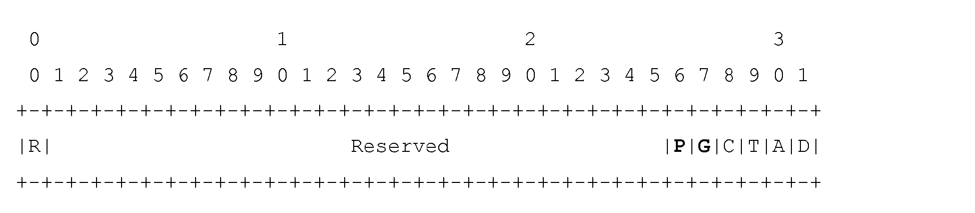

Pruning (P): 1 bit. This bit is set when the message is being used to control and manage a pruning/filtering action. Grafting (G): 1 bit. This bit is set when the message is being used to control and manage a grafting/resume action.

In addition, the Notify message also carries a label set. The label set contains an ordered list of labels that should be pruned or grafted by the targeted branch node 4. The label set is composed of one or more Label Set objects. These objects are typically TLVs. Each object/TLV contains one or more elements of the Label Set. Label sets are filled by the leaf node 3 emitting requests, and are based on the format of the Label Set object defined in [RFC3471]. The information carried in a Label Set is:

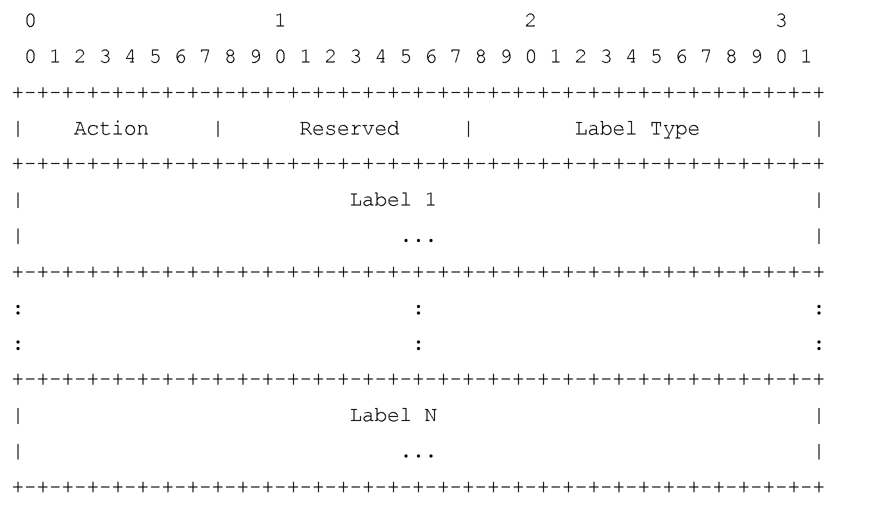

A branch node 4 receiving a Notify message containing an Admin Status Object with the Pruning (P) bit set and the subsequent Label Set, should initiate the filtering procedure previously described. Other bits should be processed and propagated as normal.

A branch node 4 receiving a Notify message containing an Admin Status Object with the Grafting (G) bit set and the subsequent Label Set, should initiate the un-filtering/resume procedure previously described. Other bits should be processed and propagated as normal.

## Claims

1. A method to avoid unsolicited traffic transmission to non receiver nodes, in an Multi Protocol Label Switching, MPLS, communication network (1) composed of switching nodes (A-K) and using at least one Point-to-Multipoint, P2MP, tunnel (2) to transport P2MP Label Switch Paths, LSPs, (5, 6) comprising the steps of:
- transporting P2MP LSPs (5, 6) over said P2MP tunnel (2) in such a way that all downstream nodes of said tunnel (2) receive every labelled packet (7, 8) which is injected into said tunnel (2),
- sending a traffic filtering request (11) from a termination node (3) towards its closest upstream branch node (4) in the P2MP tunnel, upon reception of a labelled packet (8) pertaining to an unsolicited LSP (6), to stop the emission of said unsolicited LSP (6),
- filtering labelled packets (7, 8) at said upstream branch node (4) upon reception of said traffic filtering request (11), to stop the emission of unsolicited traffic for said unsolicited LSP (6).

2. The method of claim 1, wherein a traffic filtering request (11) comprises an identifier of said unsolicited LSP (6) to filter.

3. The method of any one of claims 1 to 2, where a termination node (3) detects the reception of an unsolicited traffic when a label of an incoming labelled packet (6) is not present in the Incoming Label Map table, ILM, of the node (3).

4. The method of any one of claims 1 to 3, where the filtering is realised by segregating the labels of incoming packet (7, 8) to select the downstream nodes over which packet must be forwarded or not.

5. The method of any one of claims 1 to 4, where the upstream branch node (4) creates a new entry in its Incoming Label Map table, ILM, (10) to isolate said unsolicited LSP (6) from others LSPs.

6. The method of any one of claims 1 to 5, wherein when a branch node (4) is requested to filter on all of its downstream nodes in the P2MP tunnel for a given LSP, further comprising the steps of:
- sending a traffic filtering request from said branch node (4) towards its closest upstream branch node in the P2MP tunnel, to stop the emission of said LSP,
- filtering labelled packets at said upstream branch node upon reception of said traffic filtering request, to stop the emission of traffic for said LSP.

7. The method of any one of claims 1 to 6, further comprising the steps of:
- sending a traffic resume request from a node (3) towards its closest upstream branch node (4) in the P2MP tunnel, to resume the emission of a LSP,
- stopping filtering labelled packets at said upstream branch node (4) upon reception of said traffic resume request, to resume the emission of traffic for said LSP
- forward a traffic resume request from said branch node to its upstream branch node if traffic had been previously filtered upstream.

8. The method of any one of claims 1 to 7, wherein a traffic resume request comprises an identifier of said LSP to resume.

9. The method of any one of claims 1 to 8, wherein when a branch node (4) detects that all of its downstream nodes are receivers for a given LSP, further comprising the steps of:
- removing ILM entries previously created to isolate LSPs with unsolicited traffic,
- resume previous behaviour without filtering.

10. The method of any one of claims 1 to 9, wherein when a branch node (4) is informed that one of its downstream nodes (3) has restarted, further comprising the steps of:
- stop filtering at said branch node (4) toward said downstream node (3),
- waiting for the reception of traffic filtering requests (11) from said downstream node (3),
- forward a traffic resume request from said branch node to its upstream branch node if traffic had been previously filtered upstream.

11. The method of any one of claims 1 to 10, wherein traffic filtering request and traffic resume request use an extended Notify message.

12. The method of claim 11, wherein the Notify message is extended with a "P" or "Pruning" bit for traffic filtering request and a "G" or "Grafting" bit for traffic resume request.

13. The method of claim 11 or 12, wherein the Notify message is extended with a label set containing an ordered lists of labels that should respectively be pruned of grafted, depending of the setting of "P" or "G" bits.

## Amended claims

### Amended claims in accordance with Rule 137(2) EPC.

**1.** A method to avoid unsolicited traffic transmission to non receiver nodes, in an Multi Protocol Label Switching, MPLS, communication network (1) composed of switching nodes (A-K) and using at least one Point-to-Multipoint, P2MP, tunnel (2) to transport P2MP Label Switched Paths, LSPs, (5, 6) **characterized in that** it comprises the steps of:
- transporting P2MP LSPs (5, 6) over said P2MP tunnel (2) in such a way that all downstream nodes of said tunnel (2) receive every labelled packet (7, 8) which is injected into said tunnel (2),
- sending a traffic filtering request (11) from a termination node (3) towards the closest upstream branch node (4) of said termination node (3) in the P2MP tunnel, upon reception of a labelled packet (8) pertaining to an unsolicited LSP (6), to stop the emission of said unsolicited LSP (6),
- filtering labelled packets (7, 8) at said closest upstream branch node (4) of said termination node (3) upon reception of said traffic filtering request (11), to stop the emission of unsolicited traffic for said unsolicited LSP (6).

**2.** The method of claim 1, wherein a traffic filtering request (11) comprises an identifier of said unsolicited LSP (6) to filter.

**3.** The method of any one of claims 1 to 2, where a termination node (3) detects the reception of an unsolicited traffic when a label of an incoming labelled packet (6) is not present in the Incoming Label Map table, ILM, of the node (3).

**4.** The method of any one of claims 1 to 3, where the filtering is realised by segregating the labels of incoming packets (7, 8) to select the downstream nodes over which packets must be forwarded or not.

**5.** The method of any one of claims 1 to 4, where the upstream branch node (4) creates a new entry in its Incoming Label Map table, ILM, (10) to isolate said unsolicited LSP (6) from others LSPs.

**6.** The method of any one of claims 1 to 5, wherein when a branch node (4) is requested to filter on all of its downstream nodes in the P2MP tunnel for a given LSP, further comprising the steps of:
- sending a traffic filtering request from said branch node (4) towards the closest upstream branch node of said branch node (4) in the P2MP tunnel, to stop the emission of said LSP,
- filtering labelled packets at said closest upstream branch node of said branch node (4) upon reception of said traffic filtering request, to stop the emission of traffic for said LSP.

**7.** The method of any one of claims 1 to 6, further comprising the steps of:
- sending a traffic resume request from a node (3) towards the closest upstream branch node (4) of said node (3) in the P2MP tunnel, to resume the emission of a LSP,
- stopping filtering labelled packets at said closest upstream branch node (4) of said node (3) upon reception of said traffic resume request, to resume the emission of traffic for said LSP
- forward a traffic resume request from said branch node to its upstream branch node if traffic had been previously filtered upstream.

**8.** The method of claim 7, wherein a traffic resume request comprises an identifier of said LSP to resume.

**9.** The method of any one of claims 3 to 8, wherein when a branch node (4) detects that all of its downstream nodes are receivers for a given LSP, further comprising the steps of:
- removing ILM entries previously created to isolate LSPs with unsolicited traffic,
- resume previous behaviour without filtering.

**10.** The method of any one of claims 1 to 9, wherein when a branch node (4) is informed that one of its downstream nodes (3) has restarted, further comprising the steps of:
- stop filtering at said branch node (4) toward said downstream node (3),
- waiting for the reception of traffic filtering requests (11) from said downstream node (3),
- forward a traffic resume request from said branch node to its upstream branch node if traffic had been previously filtered upstream.

**11.** The method of any one of claims 7 to 10, wherein traffic filtering request and traffic resume request use an extended Notify message.

**12.** The method of claim 11, wherein the Notify message is extended with a "P" or "Pruning" bit for traffic filtering request and a "G" or "Grafting" bit for traffic resume request.

**13.** The method of claim 12, wherein the Notify message is extended with a label set containing an ordered list of labels that should respectively be pruned or grafted, depending of the setting of "P" or "G" bits.
